(19) Europäisches Patentamt
European Patent Office
Office européen des brevets

(11) **EP 3 856 687 B1**

(12) **EUROPÄISCHE PATENTSCHRIFT**

(45) Veröffentlichungstag und Bekanntmachung des Hinweises auf die Patenterteilung:
**22.01.2025 Patentblatt 2025/04**

(21) Anmeldenummer: **19758602.7**

(22) Anmeldetag: **18.07.2019**

(51) Internationale Patentklassifikation (IPC):
*C02F 9/00* (2023.01)    *C02F 1/28* (2023.01)
*C02F 1/44* (2023.01)    *C02F 1/52* (2023.01)
*C02F 1/56* (2023.01)    *C02F 1/66* (2023.01)
*C02F 103/30* (2006.01)    *C02F 1/00* (2023.01)

(52) Gemeinsame Patentklassifikation (CPC):
**C02F 9/00;** C02F 1/281; C02F 1/283; C02F 1/285;
C02F 1/441; C02F 1/5245; C02F 1/56; C02F 1/66;
C02F 2001/007; C02F 2103/30; Y02W 10/37

(86) Internationale Anmeldenummer:
**PCT/DE2019/000199**

(87) Internationale Veröffentlichungsnummer:
**WO 2020/015770 (23.01.2020 Gazette 2020/04)**

(54) **VORRICHTUNG UND VERFAHREN ZUR REINIGUNG VON MIT ELEKTROLYTEN UND FARBSTOFFEN VERUNREINIGTEM ABWASSER**

DEVICE AND METHOD FOR CLEANING WASTEWATER CONTAMINATED WITH ELECTROLYTES AND DYES

DISPOSITIF ET PROCÉDÉ POUR PURIFIER DES EAUX USÉES POLLUÉES PAR DES ÉLECTROLYTES ET DES COLORANTS

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **19.07.2018 DE 102018005943**

(43) Veröffentlichungstag der Anmeldung:
**04.08.2021 Patentblatt 2021/31**

(73) Patentinhaber: **Eragon R&D GmbH**
**67592 Flörsheim-Dalsheim (DE)**

(72) Erfinder: **HALDER, Gourab**
**67549 Worms (DE)**

(74) Vertreter: **Bensen, Harald**
**Herrnhuter Weg 5**
**12043 Berlin (DE)**

(56) Entgegenhaltungen:
**DE-A1- 2 740 855**     **ES-A1- 2 350 074**
**US-A1- 2001 052 499**     **US-A1- 2016 068 417**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Reinigung von mit Elektrolyten und Farbstoffen verunreinigtem Abwasser und eine dazugehörige Vorrichtung sowie deren Verwendung.

Beim Färben von Textilien kommen viele unterschiedliche Farbstoffe für die jeweiligen Stoffe/Gewebe zum Einsatz. Reaktivfarbstoffe und Direktfarbstoffe werden für Textilien auf Baumwoll- und Polyesterbasis am häufigsten eingesetzt. Ein Nebenprodukt des Färbens von Textilien ist verunreinigtes Abwasser. Zwei wichtige Bestandteile des Abwassers sind: Farbpigmente und Elektrolyte. Zudem werden Natriumhydroxid, Natriumcarbonat, Enzyme, Säuren, chemische Weichmacher und/oder Wasserstoffperoxid in verschiedenen Stufen eines Färbeprozesses verwendet und können so auch Bestandteil des Abwassers sein.

Durch die Verwendung hoher Konzentrationen an Salzen (Elektrolyten) wird die anionische Abstoßung zwischen der Zielfaser und den Farbstoffmolekülen neutralisieren. Dies ermöglicht dunklere Farbtöne und eine bessere Nassfixierung. Die verwendeten Salze sind typischerweise Natriumsulfat, Natriumchlorid, Natriumcarbonat und Natriumbicarbonat, abhängig von der Art und Reaktivität der Farbstoffe. Aufgrund seines Preis/Leistungs-Verhältnisses wird Natriumsulfat am häufigsten verwendet.

Reaktivfarbstoffe erfordern eine besonders hohe Salzkonzentration im Neutralisationsprozess. Im schlimmsten Fall werden bis zu 120 Gramm/Liter (g/l) eingesetzt. Die Farbstoffkonzentration beträgt ungefähr 25-30 g/l. Nach dem Einweichen wird Natriumcarbonat/Natriumbicarbonat für Waschzwecke verwendet. Bei der Verwendung von Natriumcarbonat kommen bis zu 30 g/l zum Einsatz.

Der Färbeprozess umfasst mehrere Stufen, bei den Stufen vor und nach dem Waschen werden, abhängig von der gewünschten Sättigung der Farben, Natriumhydroxid, Weichmacher auf Silikonbasis, Enzyme, Säuren und manchmal Wasserstoffperoxid verwendet.

Gemittelt über den gesamten Färbeprozess (einschließlich Vor- und Nachwaschen) kann die Restsättigungskonzentration zwischen 4 und 12 g/l betragen. Die nach dem Waschen verbleibende Farbstoffkonzentration kann zwischen 500-2500 mg/l variieren. Andere Chemikalien sind in einer Konzentration von weniger als 2 mg·l$^{-1}$ vorhanden.

Farbstoffhaltige Abwässer, wie sie weltweit in der Textilindustrie bei Färbe- und Waschprozessen von Textilien entstehen, stellen ein großes ökologisches Problem dar. Die großen Mengen an Farbstoffabwässern und insbesondere die vielfach verwendeten synthetischen Farbstoffe, die in der Natur nur sehr langsam abgebaut werden, stellen ein großes Problem für die Umwelt dar. In den vergangenen Jahren haben Mehrfachkombinationen von Technologien, wie Elektrokoagulation, aerobanaerob bakterienbasierte Aufschlüsse, Membranen, aufgrund von Funktionsempfindlichkeit, chemischen Betriebsbeschränkungen und häufiger Membranblockierung ein hohes Versagensniveau gezeigt, was zu hohen finanziellen Verlusten führt.

Der Abbau von Farbstoffen unter Verwendung von mehrstufigen Ionenaustauschsystemen ist teuer und das Harz der Ionenaustauscher muss häufig regeneriert werden, so dass hohe Strömungsraten nicht erzielt werden können.

Diese technologischen und finanziellen Hürden verhindern eine Massenanwendung der Behandlungsprozesse in vielen Entwicklungsländer, in denen die Textilindustrie stark vertreten ist, und verurteilen deren ökologische Anstrengungen zum Scheitern. Auch die kontinuierliche Verwendung von Grundwasser wirft in Ländern in denen kein Frischwasser für den Prozess verfügbar ist, Probleme auf.

In der US 6 059 978 A wird ein Verfahren zum Entfernen von Farbstoffen aus Abwässern beschrieben.

In der US 2001 / 0 052 499 A1 wird ein Verfahren zur Behandlung von Abwasser beschrieben, das bei einem Lackiervorgang in einer Maschinenfabrik anfällt.

In der DE 27 40 855 A1 wird ein Verfahren zur Abwasseraufbereitung bei Küpenfärbeprozessen beschreiben, insbesondere bei Indigofärbeprozessen zur Abtrennung des Küpenfarbstoffs.

In der US 2016 / 0 068 417 A1 wird ein Verfahren zur Wasseraufbereitung, einschließlich der Abtrennung und Klärung, unter Verwendung einer Peracetat-Lösung beschrieben.

In der ES 2 350 074 A1 wird ein Verfahren zur Entfernung von Farbstoffen aus Abwasser, mittels eines kombinierten Koagulations-Flockungs- und Adsorptionsverfahrens unter Verwendung des Biopolymers Chitosan sowohl als Biokoagulans als auch als Bioadsorbens, beschreiben.

Aufgabe der vorliegenden Erfindung ist es, ein kostengünstiges System zur Abwasserreinigung, insbesondere der Reinigung von Abwässern der Textilindustrie, bereitzustellen, mit dem ein großer Teil des Prozesswassers regeneriert und wieder in den Färbeprozess zurückgeführt werden kann.

Die Aufgabe der vorliegenden Erfindung wird durch ein Verfahren der eingangs genannten Art gelöst, das die folgenden Schritte umfasst: (a) Neutralisation der Elektrolytsalze durch Zugabe von mindestens einem ersten Neutralisationsmittel, (b) Sedimentation von fällbaren Verunreinigungen und Abscheidung von relativ sauberem Wasser, (c) Verdünnen des neutralisierten Wassers mit frischem Wasser, abhängig von der Leitfähigkeit des neutralisierten Wassers, (d) Binden der Farbstoffe durch Zugabe von mindestens einem Farbstoffpigmentbinder, (e) Ausflocken der gebundenen Farbstoffpigmente durch Zugabe von mindestens einem Flockungsmittel, (f) Beschleunigung der Flockenbildung durch Zugabe von mindestens einem Flockenbildungsbeschleuniger, (g) Sedimentation von fällbaren Verunreinigungen und Abscheidung von relativ sauberem Wasser, (h) Filtration des behandelten Wassers mit einem ersten Filtrationsmedium, (i) Filtration des behandelten und gefilterten Wassers mit einem zweiten Filtrationsmedium, (j) Neutralisation der Elektrolytsalze durch Zugabe von mindestens einem zweiten Neutralisationsmittel, zur Minimierung der Spuren von absorbierten organischen Reststoffen, (k) Umkehrosmose der neutralisierten Salzlösung.

Abwässer aus dem Färbeprozess der Textilindustrie enthalten normalerweise Farbstoffe in einer Konzentration von 500-1500 mg/l und Elektrolyte (normalerweise Natriumcarbonat und Natriumsulfate oder Natriumbisulfit) in einer Konzentration von 4-12 g/l. Die Leitfähigkeit des Abwassers liegt normalerweise zwischen 5500-15000 $\mu$S/cm und hat einen pH-Wert von 6-9.

Die Sedimentation (Schritt b) wird geeigneter Weise für 5-10 Minuten in einem Edelstahlbehälter durchgeführt.

In dem Verdünnungsschritt (Schritt c) wird das Abwasser mit frischem Wasser verdünnt. Geeigneter Weise wird frisches Wasser mit einer Leitfähigkeit von maximal 700 $\mu$S/cm verwendet, um eine Zielleitfähigkeit von $\leq$ 7000 $\mu$S/cm zu erreichen. Wenn das Abwasser bereits eine Leitfähigkeit von $\leq$ 7000 $\mu$S/cm aufweist, wird der Schritt (c) übersprungen. Hierzu kann auch das im Verfahren gewonnene Wasser verwendet werden. Die Menge an Wasser, die dem Verfahren zugeführt wird, ist abhängig von der gemessenen Leitfähigkeit des Abwassers.

Die eingesetzten Feststoffe werden geeigneter Weise durch Dosiersysteme aus Chemikalienspeichern in die entsprechenden Behälter (Mischbehälter, Reaktoren) überführt.

Die zweite Filtration (Schritt i) dient dazu Spuren von absorbierten organischen Reststoffen zu minimieren.

Für die Sedimentation in Schritt (g) wird geeigneter Weise ein Absetzbecken mit einer Überlaufgeschwindigkeit von 0,8 bis 1,0 m/h verwendet.

Für die Umkehrosmose in Schritt (k) wird geeigneter Weise eine Umkehrosmosemembran mit einem TDS (Total Dissolved Solid: vollständig gelöster Feststoff) von 5000 mg/l und einer Erholungsrate von 80-95 % verwendet.

Als erstes Neutralisationsmittel werden vorzugsweise Magnesiumoxid und/oder Magnesiumhydroxid, Calciumoxid und/oder Calciumhydroxid und Calciumaluminaten dem Abwasser zugegeben. Mit dem ersten Neutralisationsmittel werden die im Abwasser enthaltenen Elektrolyte (Carbonate, Bicarbonate, Sulfate, usw.) neutralisiert, d.h. durch Calciumoxid und/oder Calciumhydroxid und Calciumaluminate in die entsprechenden Hydroxide überführt.

Als Farbstoffpigmentbinder werden vorzugsweise polymere, polyfunktionale Amide verwendet werden. Geeignete Farbstoffpigmentbinder sind polyfunktionale Amine der Dicyandiamide oder guanidinbasierte Polymere mit einem molekularen Gewicht von 150-250 g·mol$^{-1}$. Weitere geeignete Farbstoffpigmentbinder sind Polydiallyldimethyllammoniumchlorid oder Epipolyaminkondensate oder Diallylamincopolymere oder Sulfonsäurederivate mit Methylen oder Phenol oder Bis-Phenol oder aromatischen Polykondensationsprodukten. Geeigneter Weise werden die Farbstoffpigmentbinder in einer Menge bezogen auf das Abwasser von 0,477 bis 0,715 mol·kg$^{-1}$ zugegeben.

Als Flockungsmittel werden vorzugsweis aluminium- und/oder eisenhaltige Flockungsmittel (Fällmittel) verwendet werden. Geeignete Flockungsmittel sind Aluminiumchlorhydrat und Eisensulfat in einem Gewichtsverhältnis von 4:1 oder 2:2, in einer Menge bezogen auf das Abwasser zwischen 50-100 g·kg$^{-1}$. Weitere geeignete Flockungsmittel sind Eisenchlorhydrat und Aluminiumsulfat.

Als Flockenbildungsbeschleuniger wird vorzugsweise ein kationisches und/oder nicht-ionisches polyacrylamidbasiertes Polymer verwendet. Geeigneter Weise werden kationische und/oder nicht-ionische Polyacrylamidcopolymere mit einem molekularen Gewicht von $8 \cdot 10^6$ bis $10 \cdot 10^6$ g·mol$^{-1}$, in einer Menge bezogen auf das Abwasser zwischen 0,1 bis 0,125 $\mu$mol·kg$^{-1}$, verwendet. Des Weiteren sind Poly-(n,n)-dimethylacrylamid, copolymerisiert mit Styrol und Butadien oder Methylmethacrylat, und Polydimethyldiallylammoniumchlorid oder Polyacrylooxyethyltrimethylammoniumchlorid und deren Copolymere als Flockungsmittel geeignet.

Als erstes Filtermedium werden vorzugsweise granulierte, mikroporöse Aluminiumsilikate verwendet. Geeigneter Weise werden hochporöse Calcium-, Kalium- und/oder Natrium-Aluminiumsilicatmischungen als erstes Filtermedium verwendet. Geeigneter Weise weist das erste Filtermedium eine Korngröße zwischen 0,5 bis 3,0 mm auf. Weitere geeignete Filtermedien sind feiner Quarzsand oder Glass-Filtermedien oder aktive Filtrationsmedien (AFM).

Als zweites Filtermedium wird vorzugsweise granulierte Aktivkohle verwendet. Geeigneter Weise wird als zweites Filtermedium granulierte Aktivkohle aus Kokosnussschalen oder hochgradig bituminöser Kohle verwendet, wobei die Oberfläche des zweiten Filtermediums im Bereich zwischen 850-1050 m$^2$/g und die Porengröße in einem Bereich zwischen 0,88 und 1,04 cm$^3$/g liegt. Des Weiteren ist Anthrazit (bzw. Anthrazitkohle) ein geeignetes Filtermedium.

Als zweites Neutralisationsmittel werden vorzugsweise Zielanionen enthaltende Mineralsäuren verwendet. Geeigneter Weise wird als Mineralsäure Schwefelsäure verwendet, um die Hydroxide (in einer Reaktionsgeschwindigkeit von 0,015 bis 0,032 mol·kg$^{-1}$) wieder zurück in Sulfate zu wandeln.

Die in Schritt (j) gewonnenen Elektrolytsalze werden vorzugsweise einem Verfahren zum Färben von Textilien zugeführt.

Das in Schritt (k) gesammelte Konzentrat wird vorzugsweise einem Verfahren zum Färben von Textilien zugeführt. Das Membrankonzentrat (10-20 % des zurückgehaltenen Volumens) besteht im Wesentlichen aus Natriumsulfat/Natriumchlorid mit einer Konzentration im Bereich von 22-42 g/l. Das Konzentrat kann für eine spätere Wiederverwendung als Elektrolyt in einem Färbeprozess gelagert werden.

Das in Schritt (k) gewonnene Membranpermeat (80-90 %) wird vorzugsweise der Verdünnung in Schritt (c) zugeführt. Die Leitfähigkeit des Membranpermeats liegt in einem Bereich zwischen 200-700 µS/cm. Überschüssiges Permeatwasser kann ohne weitere Behandlung in die kommunalen Abwasserkanäle geleitet werden.

Des Weiteren wird Aufgabe der vorliegenden Erfindung durch eine Vorrichtung für die Durchführung des erfindungsgemäßen Verfahrens zur Reinigung von mit Elektrolyten und Farbstoffen verunreinigtem Abwasser gelöst, umfassend: mindestens einen Abwasserzwischenspeicher, einen dem Abwasserzwischenspeicher nachgeordneten ersten Reaktor, umfassend eine Mischkammer mit einer Mischvorrichtung und mindestens einem Dosiersystem zum Befüllen des ersten Reaktors, ein dem ersten Reaktor nachgeordnetes erstes Klärbecken, eine dem ersten Klärbecken nachgeordnete Mischkammer, umfassend eine Mischvorrichtung, einen der Mischkammer nachgeordneten zweiten Reaktor, umfassend eine Mischkammer mit einer Mischvorrichtung und mindestens einem Dosiersystem zum Befüllen des zweiten Reaktors, einen dem zweiten Reaktor nachgeordneten dritten Reaktor, umfassend eine Mischkammer mit einer Mischvorrichtung und mindestens einem Dosiersystem, einen dem dritten Reaktor nachgeordneten vierten Reaktor, umfassend eine Ausfällkammer, einer Mischvorrichtung und mindestens ein Dosiersystem, ein dem vierten Reaktor nachgeordnetes zweites Klärbecken, eine dem zweiten Klärbecken nachgeordnete erste Filtereinheit, eine der ersten Filtereinheit nachgeordnete zweite Filtereinheit, einen der zweiten Filtereinheit nachgeordneten fünften Reaktor, umfassend eine Neutralisierungskammer mit einer Mischvorrichtung, und einen dem fünften Reaktor nachgeordneten Separator, wobei der Separator als Umkehrosmoseeinheit ausgelegt ist.

In dem Separator abgeschiedenes Konzentrat ist vorzugsweise in einen Zwischenspeicher und gereinigtes Wasser in einen Reinwassertank leitbar.

Der erste Reaktor, die Mischkammer, der fünfte Reaktor und/oder der Zwischenspeicher weisen vorzugsweise eine Sensoreinheit zur Überwachung des pH-Werts und des Salzgehalts auf.

Weiterhin wird die Aufgabe der vorliegenden Erfindung durch eine Verwendung des Verfahrens zur Reinigung von mit Elektrolyten und Farbstoffen und/oder der dazugehörigen Vorrichtung zur Reinigung von Abwässern der Textilindustrie gelöst. Hierdurch kann 96-99 % des Prozesswassers wiedergewonnen und dem (Textil-)Färbeprozess direkt wieder zugeführt werden.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörige Figur. Im Einzelnen zeigt

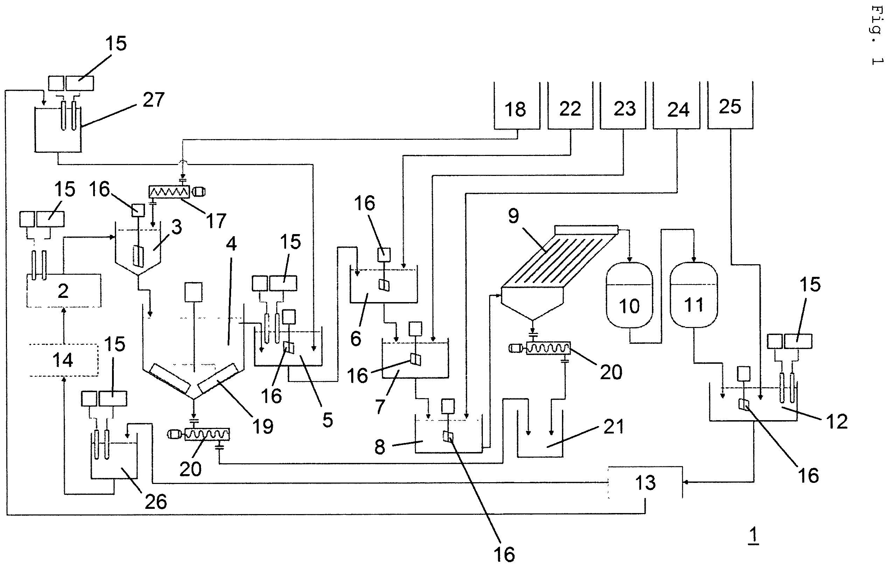

Figur 1    eine schematische Darstellung einer Vorrichtung für die Durchführung eines Verfahrens zur Reinigung von Abwasser.

Das vorliegende Verfahren ermöglicht eine zuverlässige und erschwingliche Reinigung bzw. Aufbereitung von Prozesswasser, das aus Färbe- und Waschanlagen der Textilindustrie stammt. Das Verfahren umfasst eine mehrstufige Behandlung des Abwassers bzw. Prozesswassers, die Farbmittelschadstoffe (synthetische Farbstoffe), die nach dem Färbe- und Waschschritten von Geweben im Prozesswasser enthalten sind, neutralisiert und aus dem Abwasser entfernt.

Figur 1 zeigt eine schematische Darstellung einer Vorrichtung 1 zur Reinigung von mit Elektrolyten und Farbstoffen verunreinigtem Abwasser aus der Textilindustrie, umfassend: einen Abwasserzwischenspeicher 2, einen ersten Reaktor 3, ein erstes Klärbecken 4, eine Mischkammer 5, einen zweiten Reaktor 6, einen dritten Reaktor 7, einen vierten Reaktor 8, ein zweites Klärbecken 9, eine erste Filtereinheit 10, eine zweite Filtereinheit 11, einen fünften Reaktor 12 und einen Separator 13.

Das aus einem Färbe- und Waschprozess 14 stammende Abwasser wird in einem Behälter, dem Abwasserzwischenspeicher 2, gelagert, um die Konzentration der Salze, die aus dem Färbeprozess stammen, zu senken. Das geschätzte Volumen des Abwasserpufferspeichers (bzw. des Abwasserzwischenspeicher 2) variiert zwischen 20 und 25 Volumen% der Spitzenflussrate. Die Speicherkapazität des Abwasserzwischenspeichers 2 hängen von der Spitzenflussrate des Abwassers für eine einzelne Behandlungslinie ab und liegt normalerweise bei 2-6 $m^3$. An dem Abwasserzwischenspeicher 2 ist eine Sensoreinheit 15 für pH und Leitfähigkeit angeordnet, um die Qualität des Abwassers im Abwasserzwischenspeicher 2 kontinuierlich zu überwachen. Von dem Abwasserzwischenspeicher 2 kann das Abwasser, durch Pumpen, in einen ersten Reaktor 3 gepumpt werden.

Der erste Reaktor 3 ist als Schnellmischkammer ausgelegt und umfasst eine Mischvorrichtung 16 und ein Schneckenfördersystem 17 um festes Pulver in den Reaktor einzubringen. Die Mischvorrichtung 16 umfasst Mischerflügel/Mischpropeller und eine Wellen- und Getriebeanordnung, die von einem Motor angetrieben werden. Der erste Reaktor 3 ist so ausgelegt, dass der Mischer eine hohe Umdrehungszahl erreicht. Eine Chemikalienspeicheranordnung (Dosiersystem 18) ist mit einer elektrischen Heizung und einem motorisierten Rüttler ausgestattet, um den Inhalt (feste Chemikalien) trocken zu halten und von dort über ein Schneckenfördersystem 17 in den ersten Reaktor 3 zu befördern. Es versteht sich, dass auch andere Systeme, die zum Überführen von festen Stoffe in den Reaktor geeignet sind, eingesetzt werden können. Von dem ersten Reaktor 3 kann das Abwasser, durch Pumpen, in ein erstes Klärbecken 4 gepumpt werden.

Das erste Klärbecken 4 ist kreisförmig mit einem konischen Bodenabschnitt zur Ansammlung von Schlamm ausgebildet. Das Verhältnis von Durchmesser zu Höhe liegt zwischen 1:1 und 1:2. Im Bodenabschnitt ist ein abnehmbarer, rotierender Bodenabstreifer 19 angeordnet, der eine Zahnrad- und Motoranordnung umfasst und mit einer Hauptwelle verbunden ist. Ausgefallener Schlamm wird von einer Exzenterschneckenpumpe 20 in ein Schlammsammelbehälter 21 überführt. Von dem ersten Klärbecken 4 kann das Abwasser, durch Pumpen, in eine Verdünnungskammer gepumpt werden.

Die Verdünnungskammer ist als Mischkammer 5 mit einer Mischvorrichtung 16 mit Mischpropellern ausgelegt. Eine Sensoreinheit 15 zur Überwachung des pH-Werts und der Leitfähigkeit ist installiert, um den Bedarf an Wasser, der zum Verdünnen benötigt wird, zu bestimmen. Von der Mischkammer 5 kann das Abwasser, durch Pumpen, in einen zweiten Reaktor 6 gepumpt werden.

Der zweite Reaktor 6 ist als Mischkammer mit einem Dosiersystem 22 und einer Mischvorrichtung 16 ausgelegt. Unter Berücksichtigung der Viskosität von Elektrolytpolymeren ist die Polymerverdünnung obligatorisch und das Polymer, das dem Abwasser zugeführt wird, wird in einer Konzentration von 2-5 % (20-50 g/l) hergestellt. Vom zweiten Reaktor 6 kann das Abwasser, durch Pumpen, in einen dritten Reaktor 7 gepumpt werden.

Der dritte Reaktor 7 ist als Mischkammer ausgelegt, mit zwei Dosiersystemen 23 mit Chemikalienlagerung, für 30-40 %ige (300-400 g/l) Alumiuniumchlorhydrat- und Eisensulfatlösungen, und einer Mischvorrichtung 16. Vom dritten Reaktor 7 kann das Abwasser, durch Pumpen, in einen vierten Reaktor 8 gepumpt werden.

Der vierte Reaktor 8 ist als Flockenentwicklungskammer ausgelegt und umfasst ein Dosiersystem 24 für Polymere und eine Mischvorrichtung 16. Da die Acrylamidpolymerverbindung durch ihr hohes Molekulargewicht eine hohe Viskosität besitzt, ist eine Verdünnung obligatorisch. Das Polymer wird zwischenzeitlich in einer Konzentration von 0,5-1,5 % (5-15 g/l) hergestellt. Vom vierten Reaktor 8 kann das Abwasser, durch Pumpen, in ein zweites Klärbecken 9 gepumpt werden.

Der zweite Klärbehälter 9 ist ein kompakter Lamellenabscheider mit einer unteren Schlammsammelkammer. Das Klärbecken ist für eine Filtrationsrate von 0,8-1 m$^3$/h/m$^2$ ausgelegt. Die Neigung der Filterplatte beträgt 60 °. Am unteren Teil des Klärbeckens ist eine Exzenterschneckenpumpe 20 angeordnet, mit der der Schlamm in den Schlammsammelbehälter 21 gepumpt wird. Vom zweiten Klärbecken 9 kann das Abwasser, durch Pumpen, in eine erste Filtereinheit 10 gepumpt werden.

Die erste Filtereinheit 10 hat geeigneter Weise einen Gefäßdurchmesser von 0,8 bis 2,0 m und eine zylindrische Höhe von 1,2 bis 1,7 m. Von der ersten Filtereinheit 10 kann das Abwasser, durch Pumpen, in eine zweite Filtereinheit 11 gepumpt werden.

Die zweite Filtereinheit 11 ist ein Aktivkohlefilter, die geeigneter Weise einen Gefäßdurchmesser von 1-2 m und eine zylindrische Höhe von 1,2 bis 1,7 m aufweist. Von der zweiten Filtereinheit 11 kann das Abwasser, durch Pumpen, in einen fünften Reaktor 12 gepumpt werden.

Der fünfte Reaktor 12 ist als Neutralisationskammer ausgelegt und umfasst eine Reaktorkammer aus rostfreiem Stahl 314 mit einer Mischvorrichtung 16 und einer Sensoreinheit 15 zur Überprüfung des pH-Werts und der Leitfähigkeit. Der fünfte Reaktor 12 ist mit einem Dosiersystem 25 verbunden, durch das ein geeignetes Zielelektrolyt, das ein geeignetes Anion enthält, in den fünften Reaktor 12 überführt wird. Die entsprechende Mineralsäure wird auf Basis der pH-Wert-Überwachung und Zugabe einer Base, wie beispielsweise Natriumhydroxid, neutralisiert. Vom fünften Reaktor 12 kann das Abwasser, durch Pumpen, in einen Separator 13 gepumpt werden.

In dem Separator 13 (Konzentratabscheider) wird Konzentrat, geeigneter Weise durch Umkehrosmose, abgeschieden. Niederdruckmembranen, die für die Brackwasserbehandlung verwendet werden, sind am besten geeignet und am kostengünstigsten, da der primäre Zirkulations-TDS weniger als 4500 mg/l beträgt. Der erforderliche Umkehrosmosedruck für diesen Entsalzungsbereich beträgt typischerweise 5-12 bar. Andere Mittel zur Konzentrattrennung, wie Wärmekondensation, Ionenaustausch, könnten verwendet werden, sind jedoch für hohe Strömungsraten nicht geeignet.

Das im Separator 13 erzeugte Konzentrat (Membranabbruch) wird in einen Zwischenspeicher 26 mit Sensoreinheit 15 zur Überwachung des pH-Werts und der Leitfähigkeit des Konzentrats überführt. Während das am Separator 13 abgeschiedene Membranpermeat in einen Reinwassertank 27 überführt wird, der ebenfalls mit einer Sensoreinheit 15 zur Überwachung des pH-Werts und der Leitfähigkeit des gereinigten Wassers ausgestattet ist. Der Reinwassertank 27 ist so eingestellt, dass überschüssiges Wasser aus dem Sekundärkreislauf abgelassen und frisches Zusatzwasser hinzugefügt werden kann. Die Kombination von Zusatzwasser und Membranpermeat mit proportionalem Volumen stellt Wasser für die Verdünnungsanwendung in der dritten Stufe (Schritt c) des Verfahrens bereit.

Geeigneter Weise besteht der Schlammsammelbehälter 21 aus einem Standard Big-Bag mit hängender Anordnung. Dies hilft bei kostengünstigsten Entwässerungsaufgaben und erleichtert die Handhabung und den Transport der Flüssigschlamm- und Schlammmischung, ohne das komplexe Maschinen benötigt werden.

Bei dem hier beschrieben Verfahren zur Reinigung von Abwässern wird das Gleichgewicht des gelösten Farbstoffs in der Elektrolytlösung in alkalischer Lösung unter Zugabe von Calciumoxid/Calciumhydroxid und Calciumaluminat gestört. Das molare Konzentrationsverhältnis ist wichtig, da Natrium aus bestehendem Elektrolyt um die Wiederherstellung des Gleichgewichts konkurriert und somit der Ausfällung von Carbonaten, Sulfaten, Bicarbonaten mit Calcium widerstehen wird. Aluminate helfen, schneller mit Sulfaten zu binden. Ein Hauptteil des gelösten Farbstoffs fällt in dieser Phase aus. Farbstoffe mit einer hohen Konzentration an funktionellen Gruppen, wie beispielsweise -SO$_3$, -OH, -Cl, werden hauptsächlich in diesem Schritt angegriffen, da verfügbares SO$_4$ um eine Ersatzreaktion konkurrieren würde. Das Hauptnebenprodukt dieser Reaktionsphase ist Natriumhydroxid, das in den anschließenden Schritten für eine gute Ausflockung sorgt.

Anschließend wird das behandelte Wasser verdünnt, um die gelöste Feststoffladung zu verringern, die später einer Umkehrosmosemembran zugeführt wird. Hier wird ein sekundärer Zyklus der Verdünnung und Permeattrennung (unter Verwendung einer Umkehrosmosemembran) eingeführt, der den Rest der chemischen Behandlungsschritte funktionsfähig macht.

Wenn das primäre elektrolytische Gleichgewicht gestört ist, wird es schwieriger, den Rest des gelösten Farbstoffs zu entfernen, da er in viel geringerer Konzentration vorliegt. Dieses Problem wird mit der für Fixiermittel für Farbstoffe verwendeten Technik angegangen. Das Hauptziel ist es, eine entsprechende Gruppe zur Verfügung zu stellen, die mit den funktionellen Gruppen des Farbstoffs, wie beispielsweise -SO$_3$, -OH, -NH$_2$, =NH, -CN usw., bindet. Geeigneter Weise werden Dicyandiamidpolyamine, quaternisierte ammoniumbasierende Harze und/oder Diallylamincopolymerderivate verwendet. Diese Binderchemikalien sind eine Untergruppe von billigen Fixiermitteln, die in der Textilindustrie verwendet werden, wie in den Patenten US 4 439 203 A, US 4 764 585 A erwähnt.

Nach der chemischen Reaktion des Bindemittels wird ein Ausflockungsverfahren auf metallhydroxidbasis zur Bildung ausfällbarer, schwerer Flocken durchgeführt. Da die Binderchemikalien eine stark geladene kationische Eigenschaft aufweisen, beschleunigen sie auch die Flockenbildung aufgrund elektrostatischer Anziehung mit den Metallhydroxiden.

Der Ausflockungsprozess wird durch Zugabe von kationischen/nicht-ionischen acrylamidhaltigen Polymeren weiter beschleunigt. Der Ausflockung folgt die Abtrennung durch Sedimentation. Nach der Sedimentation und Entfernung von Farbstoff wird das Wasser in zwei Stufen gefiltert. Die erste Filtration wird mit einer Metall-Aluminosilikat-Zusammensetzung durchgeführt, die ein natürliches Molekularsieb ist, um suspendierte Flocken zu entfernen. Die Filtration in der zweiten Stufe erfolgt unter Verwendung von granulierter (bzw. körniger) Aktivkohle, um jegliche Spurenmenge von übrig gebliebenen organischen Komponenten zu entfernen. Nach der Filtration wird die schwache Natriumhydroxidlösung durch Titration mit einer Mineralsäure neutralisiert, die das gewünschte Anion des Zielelektrolyten liefert, das in dem Färbeprozess wiederverwendet werden soll. Die Salzlösung wird dann einer Umkehrosmosemembran zugeführt. Anders als bei der normalen Wasserbehandlung kann der Membranabfall direkt für den Färbeprozess wiederverwendet werden, wodurch das Verfahren zu einem abfallfreien System wird. Das behandelte Reinwasser (Membranpermeat) wird für den Verdünnungsprozess (in Schritt c) wieder verwendet.

Da der Abwasseranteil schwankt ist das mehrstufige Verfahren so konzipiert, dass der Wasseranteil, in jeder Stufe, anhand von Sensoren detektierbar ist.

Die erste Stufe ist die automatische Salzkonzentrationsdetektion als Funktion der Leitfähigkeit und entscheidet über die Neutralisation von Sulfat, Carbonat und Bicarbonat in die entsprechende Hydroxid-Form.

Wenn Natriumchlorid Hauptbestandteil des Elektrolyts ist, wird die (teilweise) Neutralisation mit Carbonat durchgeführt.

In der praktischen Anwendung ist eine individuelle Bestimmung verschiedener Salze praktisch unmöglich, daher wird die Eingangseigenschaft als eine Funktion in einer Leitfähigkeitsskala festgelegt, die als eine durchschnittliche gemischte Salzkonzentration interpretiert wird.

Die Abwasserleitfähigkeit kann bis zu 15000 $\mu$Scm$^{-1}$ betragen, mit einem typischen Durchschnittswert von etwa 8500 $\mu$Scm$^{-1}$. Diese Leitfähigkeitswerte spiegeln den zugrundeliegenden Gesamtkonzentrationsgehalt des gelösten Feststoffs von 5700 bis 10000 mg·1$^{-1}$ wieder. Der pH-Wert des Abwassers kann zwischen 6 und 9 variieren.

Der TDS-Bereich von 5700 bis 10000 mg·l$^{-1}$ entspricht dem von 0,042 bis 0,075 mg·l$^{-1}$ von zweiwertigen Salzen, bei dem diese zu ungefähr 60-100 % neutralisiert sind und von 0,08 bis 0,14 mol·l$^{-1}$ für eine Mischung von einwertigen und zweiwertigen Salzen, bei dem diese zu ca. 35-40 % neutralisiert sind.

Calciumhydroxid/Calciumoxid und Calciumaluminat, gemischt im Gewichtsverhältnis von 4:1 bis 6:1 in Pulverform, werden in den ersten Reaktor 3 dosiert. Die Zufuhrrate ist direkt proportional zu der entsprechenden TDS-Konzentration, um eine gesättigte Lösung zu bilden, um die Vorwärtsreaktion zu unterstützen. Dieser Mischvorgang wird bei 70-120 U/min, für eine hohe Verwirbelungswirkung, durchgeführt. Die Reaktionszeit beträgt 5-10 Minuten.

Da die Löslichkeit von Calciumhydroxid gering ist, ist es wirtschaftlicher, es mit einem Schneckenfördersystem 17 vom Dosiersystem/Chemikalienspeicher 18 in den Abwasserzwischenspeicher 2 zu überführen.

Die chemische Reaktion mit Calciumhydroxid/Calciumoxid und Calciumaluminat-Gemisch hat zwei Funktionen:

a. Die chemische Vorwärtsreaktion entfernt Sulfate, Chloride, Carbonate, Bicarbonate, die andernfalls die späteren Schritte der chemischen Ausflockung stören.

    i.        $CaO + H_2O \rightarrow Ca(OH)_2$

ii. $Na_2SO_4 + Ca(OH)_2 \rightarrow CaSO_4 \downarrow + 2\,NaOH$

iii. $. \ Na_2CO_3 + Ca(OH)_2 \rightarrow CaCO_3 \downarrow + 2\,NaOH$

iv. $NaHCO_3 + Ca(OH)_2 \rightarrow CaCO_3 \downarrow + NaOH + H_2O$

b. Ein Großteil der gelösten Farbstoffe fällt in Form von Calciumhydroxid- und Calciumsulfat-Komplexen mit aus.

$$Farbstoff\text{-}X + Ca(OH)_2 \rightarrow Farbstoff\text{-}X \cdots Ca(OH)^+ \downarrow + OH^-$$

$$2\,Farbstoff\text{-}Cl + 2\,SO_4^{2-} + Ca^{2+} \rightarrow 2\,[Farbstoff\text{-}SO_4]^- \cdot Ca^{2+} \downarrow + 2\,Cl^-,$$

wobei X eine reaktive, funktionelle Gruppe, wie CI-, -SH, -OCH, usw., des verbliebenen Farbstoffes ist.

Das neutralisierte Wasser wird dem ersten Klärbecken 4 zur Abscheidung von fällbaren Verunreinigungen zugeführt. Die ausgefällte Aufschlämmung ist eine Mischung aus Sulfat, Chlorid, Carbonat, Bicarbonaten von Calcium zusammen mit ausfällbaren Farbstoffen. Das erste Klärbecken 4 hat eine kreisrunde Form, um es dem sich langsam drehenden Schaber am Boden (bzw. dem Bodenabstreifer 19) des ersten Klärbeckens 4 zu ermöglichen, das Anhaften von Calciumsulfat im Bodenbereich des Reaktortanks zu minimieren. Die Überlaufgeschwindigkeit ist aufgrund der schnellen Niederschlagsrate auf 4-6 $m^3/h/m^2$ ausgelegt. Die Aufschlämmung wird intermittierend aus dem unteren Teil des Klärbeckens entfernt.

Die Endprodukte im Wasser sind meistens umgewandelte Mischungen aus Natrium- und Calciumhydroxid mit einem pH-Wert von 11-12. Es wird davon ausgegangen, dass in dieser supergesättigten Lösung ungefähr 50-70 % des übriggebliebenen Farbstoffs ausfällt. Andere Spuren von Verunreinigungen, wie chemische Weichmacher oder Enzyme, werden in diesem Schritt größtenteils ebenfalls entfernt.

Nach dem Fällungs-Sedimentations-Prozess wird das Wasser zur Verdünnung mit Frischwasser in die Mischkammer 5 zur Salzkonzentrationskontrolle überführt. Um die nachfolgende chemische Bindung, Flockungssedimentation und Membranleistung in späteren Schritten zu steuern, wird die Einlasswasserleitfähigkeit von diesem Punkt aus gesteuert. Es wird eine Obergrenze von 7000 $\mu Scm^{-1}$ eingestellt, was ungefähr 4600 mg/l gelöster Feststoffkonzentration entspricht. Für ein reales System wird die Leitfähigkeit des Verdünnungswassers mit einer Leitfähigkeitssonde gemessen und das Volumen an Verdünnungswasser, das erforderlich ist, um die angestrebte Leitfähigkeit zu erreichen, wird mit einem bestimmten Volumen des in der vorherigen Stufe behandelten Abwassers gemischt, gegeben durch die Formel I:

$$Q_{dilution} = \frac{Q_{effluent} \cdot (S_{effluent} - S_{limit})}{(S_{limit} - S_{dilution})} \qquad \text{Formel I}$$

Die Leitfähigkeit des Verdünnungswassers sollte im Bereich von 500 bis 700 $\mu Scm^{-1}$ liegen.

Die Durchflussmenge des Primärsystemkreislaufs wird entsprechend der verfügbaren Abwasserqualität und der verfügbaren Verdünnungswasserleitfähigkeit berücksichtigt, die gegeben ist durch die Formel II:

$$Q_{system} = \frac{Q_{effluent} \cdot (S_{effluent} - S_{dilution})}{(S_{limit} - S_{dilution})} \qquad \text{Formel II}$$

mit,

$S_{limit}$: obere Grenzleitfähigkeit (z.B. 7000 $\mu Scm^{-1}$)
$S_{effluent}$: Leitfähigkeit des behandelten Abwassers im vorherigen Schritt
$S_{dilution}$: Leitfähigkeit des Verdünnungswassers (typisch 700 $\mu Scm^{-1}$)
$Q_{effluent}$: Flussrate des behandelten Abwassers im vorherigen Schritt
$Q_{dilution}$: Flussrate des Wassers, das für die Verdünnung benötigt wird
$Q_{system}$: Flussrate des primären Systemzyklus

Nach dem Verdünnungsvorgang wird das Wasser in den zweiten Reaktor 6 gepumpt, wo kationische Polyelektrolyte gemischt werden, um sich mit dem Rest des Farbstoffs im Wasser zu verbinden. Die verwendeten Polyelektrolyte sind polyfunktionelle Amine von Dicyandiamid- oder Guanidinpolymeren mit mindestens einer funktionellen Gruppe wie =NH und/oder -NH$_2$.

Ein Beispiel ist Polymethylencoguanidinammoniumhydrochlorid mit einem Molekulargewicht von 150-250 $g \cdot mol^{-1}$, das mit einem Anteil von 0.477 bis 0.715 $mol \cdot kg^{-1}$ des Abwassers versetzt wird. Reste der gelösten Farbstoffmoleküle binden mit diesen Polymeren und trennen sich vom Wasser. Die Mischzeit beträgt 1-2 Minuten und die Reaktionszeit 5-10 Minuten. Die Paddelmischgeschwindigkeit wird auf 40-60 U/min eingestellt.

Nach dem Mischen des Polyelektrolyten wird ein Metallflockungsmittel zu der Zwischenlösung in den dritten Reaktor 7 gegeben. Als Metallflockungsmittel wird Aluminiumchlorhydrat und Eisensulfat im Verhältnis von 4:1 oder 2:2 (bezogen auf das Gewicht) eingesetzt. Die Zufuhrrate liegt zwischen 50-100 $g \cdot kg^{-1}$ des Abwassers aus 30-40 % der Konzentratlösung. Die Kontaktzeit ist für die Reifung der Flocken auf 2-5 Minuten eingestellt. Die Mischgeschwindigkeit liegt im Bereich von 30-40 U/min.

Um den Flockenaufbau zu beschleunigen, wird eine geringe Konzentration an kationischem und/oder nichtionischem Acrylamidpolymer in den vierten Reaktor 8 dosiert. Kationen- und/oder nichtionische Polyacrylamidcopolymere mit einem hohen Molekulargewicht (Molekulargewicht $8 \cdot 10^6$ bis $10 \cdot 10^6$ $g \cdot mol^{-1}$) werden in einer Menge von 0,1 bis 0,125 $\mu mol \cdot kg^{-1}$ dem Abwasser zugegeben. Ein Niederdrehzahlpropellersystem wird verwendet, um die Ausfällung der Flocken in der Mischeinheit zu verhindern.

Zur Sedimentation wird das flockenhaltige Wasser in ein zweites Klärbecken 9 überführt. Die Überlaufgeschwindigkeit beträgt 0,8 bis 1,0 $m^3/h/m^2$. Die Flocken setzen sich im unteren Speicherbereich des zweiten Klärbeckens 9 ab. Zur Optimierung des Platzbedarfs wird geeigneter Weise ein Parallelplattenlamellenklärer verwendet. Die Wasserzusammensetzung verhindert Probleme bei der Feststoffablagerung von Calciumcarbonat und Calciumsulfat auf den Lamellenplatten.

Der Schlamm wird intermittierend entfernt. Die Schlammzusammensetzung wird in Form von Eisen- und/oder Aluminiumhydroxiden zusammen mit Polyamidpolymeren, die an die Farbstoffmoleküle gebunden sind, ausgefällt.

Nach dem Sedimentationsvorgang wird das Wasser in die Feinfiltrationseinheit 10 gepumpt. Als Filtrationsmaterial wird eine hochporöse Calcium-, Kalium-, Natrium-Aluminosilicatzusammensetzung mit der chemischen Formel $(Ca, K_2, Na_2, Mg)x[AlSi_5O_{12}]_y \cdot Z\ H_2O$ verwendet, die als ein natürliches Molekularsieb dient. Die Korngröße des Filtermediums liegt im Bereich von 0,5 bis 3,0 mm, vorzugsweise von 0,6 bis 1,2 mm. Die Feinfiltereinheit 10 ist mit 30-40 % Freibord ausgelegt. Bei einer Filtrationsrate von 20-25 $m^3/h/m^2$ kann ein Filtrationsgrad von 3-5 Mikrometer erreicht werden. Das Filtersystem wird in Abhängigkeit von den Druckunterschieden zwischen dem Einlass und dem Auslass periodisch rückgespült. Wenn die Druckdifferenz 0,5 bis 0,7 bar übersteigt, erfolgt für 10-20 Minuten eine Rückspülung mit einer Rate von 28-30 $m^3/h/m^2$.

Für den zweiten Filtrationsschritt wird das Wasser einer Aktivkohleeinheit, in der zweiten Filtereinheit 11, zugeführt, um alle noch enthaltenen absorbierbaren, organischen Verbindungen zu entfernen, die während des Verfahrens in das Wasser gelangt sind. Als Kohlenstoffquelle dienten Kokosnussschalen oder hochgradig bituminöse Kohle, wobei deren Oberfläche im Bereich zwischen 850-1050 $m^2/g$ und die Porengröße in einem Bereich zwischen 0,88 bis 1,04 $cm^3/g$ liegt. Als Filtermedium verwendet man granulierte Aktivkohle mit 15-20 % Freiraum. Die Filtrationsrate wird auf 15-20 $m^3/h/m^2$ eingestellt. Wenn die Druckdifferenz 0,5 bis 0,7 bar übersteigt, wird eine 10-20 Minuten Rückspülung mit sauberem Wasser mit einer Rate von 12 bis 18 $m^3/h/m^2$ durchgeführt.

Nach der Kohlenstofffiltration enthält die Wasserzusammensetzung im Wesentlichen Natriumhydroxid, das im fünften Reaktor 12, unter Verwendung der gleichen Anionen enthaltenden Mineralsäure, die auch als Hauptelektrolyt im Färbeprozess verwendet wurde, neutralisiert wird. Wenn beispielsweise das Hauptelektrolytsalz, das für das Färbeverfahren verwendet wird, Natriumsulfat ist, wird Schwefelsäure ausgewählt, um Natriumhydroxid zu neutralisieren. Die Titrationsreaktion wird dabei durch eine pH-Regulierung gesteuert.

Anschließend wird das salzhaltige Wasser durch einen Konzentratabscheider geleitet, der geeigneter Weise als Standard-Umkehrosmose-Membransystem ausgelegt ist. Membranen, die für die Verarbeitung von Brackwasser verwendet werden, haben normalerweise eine TDS-Grenze von 5000 mg/l, was hierfür ausreichend ist. Die Durchflussmenge durch den Membraneinlass wird $Q_{system}$ sein, wenn das System für eine vollständige Wiederverwendung ausgelegt ist, wodurch kein Abwasser erzeugt wird.

Das Membrankonzentratwasser (10-20 % Membranrückstand) wird gespeichert, um direkt wieder in dem Verfahren verwendet zu werden, wodurch die Kosten für die Beschaffung von neuem Salz gespart werden. Abhängig von der Membraneffizienz kann eine Salzkonzentration von 22-42 g/l aus dem Membrankonzentrat erhalten werden. Da die Membran verwendet wird, um Sulfat- oder Chlorid-Lösungen von Natrium bei einem pH von 7,0 bis 7,8 mit einer Spurenmenge an Calcium zu verarbeiten, wird das Skalierungsproblem minimiert. Das Konzentrat kann weiter konzentriert werden, indem eine Verdampfungsanordnung verwendet wird, wie beispielsweise unter Verwendung von Sonnenlicht oder der überschüssigen Wärme eines Heißwasserkessels, was in Färbeanlagen üblich ist.

Das Membranpermeat (80-95 %) wird für den Verdünnungsprozess verwendet. Die Wasserleitfähigkeit des Membranpermeats liegt zwischen 500 und 700 $\mu S/cm$. Die Strömungsrate des Membranpermeats hängt von der Membranleistung ab.

Das gereinigte Wasser wird gelagert, um in der dritten Stufe (Schritt c) erneut für die Verdünnung verwendet zu werden. Überschüssiges Permeatwasser im Prozesskreislauf kann ohne weitere Behandlung in den kommunalen Abwasserkanal eingeleitet werden.

Der Bestandteil an Calciumsulfat/Calciumchlorid und Calciumcarbonat, gemischt mit gefällten Polymer-, Farbstoff-, Metallhydroxid-Resten, im gesammelten Schlamm hat einen hoher Anteil (> 75-80 %). Der Schlamm kann in der Zementindustrie verwendet werden. Der Schlamm, der im zweiten Schritt des Anionen-Neutralisationsprozesses gebildet wird, weist eine hohe Adsorptionskraft für Farbstoff auf, daher minimiert diese Schlammmischung automatisch die Möglichkeit des Auslaugens von Farbstoff oder irgendeinem anderen organischen Stoff aus der Schlammmischung.

Bezugszeichenliste:

| | |
|---|---|
| 1 | Vorrichtung zur Reinigung von Abwasser |
| 2 | Abwasserzwischenspeicher |
| 3 | erster Reaktor |
| 4 | erstes Klärbecken |
| 5 | Mischkammer |
| 6 | zweiter Reaktor |
| 7 | dritter Reaktor |
| 8 | vierter Reaktor |
| 9 | zweites Klärbecken |
| 10 | erste Filtereinheit |
| 11 | zweite Filtereinheit |
| 12 | fünfter Reaktor |
| 13 | Separator |
| 14 | Färbe- und Waschprozess |
| 15 | Sensoreinheit für pH und Leitfähigkeit |
| 16 | Mischvorrichtung |
| 17 | Schneckenfördersystem |
| 18 | Dosiersystem/Chemikalienspeicher |
| 19 | Bodenabstreifer |
| 20 | Exzenterschneckenpumpe |
| 21 | Schlammsammler |
| 22 | Dosiersystem/Chemikalienspeicher |
| 23 | Dosiersystem/Chemikalienspeicher |
| 24 | Dosiersystem/Chemikalienspeicher |
| 25 | Dosiersystem/Chemikalienspeicher |
| 26 | Zwischenspeicher |
| 27 | Reinwassertank |

**Patentansprüche**

1. Verfahren zur Reinigung von mit Elektrolyten und Farbstoffen verunreinigtem Abwasser, umfassend die Schritte:

    a) Neutralisation der Elektrolytsalze durch Zugabe von mindestens einem ersten Neutralisationsmittel,
    b) Sedimentation von fällbaren Verunreinigungen und Abscheidung von relativ sauberem Wasser,
    c) Verdünnen des neutralisierten Wassers mit frischem Wasser, abhängig von der Leitfähigkeit des neutralisierten Wassers,
    d) Binden der Farbstoffe durch Zugabe von mindestens einem Farbstoffpigmentbinder,
    e) Ausflocken der gebundenen Farbstoffpigmente durch Zugabe von mindestens einem Flockungsmittel,
    f) Beschleunigung der Flockenbildung durch Zugabe von mindestens einem Flockenbildungsbeschleuniger,
    g) Sedimentation von fällbaren Verunreinigungen und Abscheidung von relativ sauberem Wasser,
    h) Filtration des behandelten Wassers mit einem ersten Filtrationsmedium,
    i) Filtration des behandelten und gefilterten Wassers mit einem zweiten Filtrationsmedium,
    j) Neutralisation der Elektrolytsalze durch Zugabe von mindestens einem zweiten Neutralisationsmittel,
    k) Umkehrosmose der neutralisierten Salzlösung.

2. Verfahren nach Anspruch 1, **dadurch gekennzeichnet, dass** als erstes Neutralisationsmittel Magnesiumoxid und/oder Magnesiumhydroxid oder

Calciumoxid und/oder Calciumhydroxid und
Calciumaluminate dem Abwasser zugegeben werden.

3. Verfahren nach Anspruch 1 oder 2, **dadurch gekennzeichnet, dass** als Farbstoffpigmentbinder polymere, polyfunktionale Amide verwendet werden.

4. Verfahren nach einem der Ansprüche 1 bis 3, **dadurch gekennzeichnet, dass** als Flockungsmittel aluminium- und/oder eisenhaltige Fällmittel verwendet werden.

5. Verfahren nach einem der Ansprüche 1 bis 3, **dadurch gekennzeichnet, dass** als Flockenbildungsbeschleuniger ein kationisches und/oder nicht-ionisches polyacrylamidbasiertes Polymer verwendet wird.

6. Verfahren nach einem der Ansprüche 1 bis 5, **dadurch gekennzeichnet, dass** als erstes Filtrationsmedium granulierte, mikroporöse Aluminiumsilikate verwendet werden.

7. Verfahren nach einem der Ansprüche 1 bis 6, **dadurch gekennzeichnet, dass** als zweites Filtrationsmedium granulierte Aktivkohle verwendet wird.

8. Verfahren nach einem der Ansprüche 1 bis 7, **dadurch gekennzeichnet, dass** als zweites Neutralisationsmittel Zielanionen enthaltende Mineralsäuren verwendet werden.

9. Verfahren nach einem der Ansprüche 1 bis 8, **dadurch gekennzeichnet, dass** die in Schritt (j) gewonnenen Elektrolytsalze einem Verfahren zum Färben von Textilien zugeführt werden.

10. Verfahren nach einem der Ansprüche 1 bis 9, **dadurch gekennzeichnet, dass** das in Schritt (k) gesammelte Konzentrat einem Verfahren zum Färben von Textilen zugeführt wird.

11. Verfahren nach einem der Ansprüche 1 bis 10, **dadurch gekennzeichnet, dass** das in Schritt (k) gewonnene Membranpermeat der Verdünnung in Schritt (c) zugeführt wird.

12. Vorrichtung (1) für die Durchführung eines Verfahrens gemäß einem der Ansprüche 1 bis 11, umfassend:

mindestens einen Abwasserzwischenspeicher (2),
einen dem Abwasserzwischenspeicher (2) nachgeordneten ersten Reaktor (3), umfassend eine Mischkammer mit einer Mischvorrichtung (16) und mindestens einem Dosiersystem (18) zum Befüllen des ersten Reaktors (3),
ein dem ersten Reaktor (3) nachgeordnetes erstes Klärbecken (4),
eine dem ersten Klärbecken (4) nachgeordnete Mischkammer (5), umfassend eine Mischvorrichtung (16),
einen der Mischkammer (5) nachgeordneten zweiten Reaktor (6), umfassend eine Mischkammer mit einer Mischvorrichtung (16) und mindestens einem Dosiersystem (22) zum Befüllen des zweiten Reaktors (6),
einen dem zweiten Reaktor (6) nachgeordneten dritten Reaktor (7), umfassend eine Mischkammer mit einer Mischvorrichtung (16) und mindestens einem Dosiersystem (23),
einen dem dritten Reaktor (7) nachgeordneten vierten Reaktor (8), umfassend eine Ausfällkammer, eine Mischvorrichtung (16) und mindestens ein Dosiersystem (24),
ein dem vierten Reaktor (8) nachgeordnetes zweites Klärbecken (9),
eine dem zweiten Klärbecken (9) nachgeordnete erste Filtereinheit (10),
eine der ersten Filtereinheit (10) nachgeordnete zweite Filtereinheit (11),
einen der zweiten Filtereinheit nachgeordneten fünften Reaktor (12), umfassend eine Neutralisierungskammer mit einer Mischvorrichtung (16),
und
einen dem fünften Reaktor (12) nachgeordneten Separator (13), wobei der Separator (13) als Umkehrosmoseeinheit ausgelegt ist.

13. Vorrichtung (1) nach Anspruch 12, **dadurch gekennzeichnet, dass** in dem Separator (13) abgeschiedenes Konzentrat in einen Zwischenspeicher (26) und gereinigtes Wasser in einen Reinwassertank (27) leitbar ist.

14. Vorrichtung (1) nach Anspruch 12 oder 13, **dadurch gekennzeichnet, dass** der erste Reaktor (3), die Mischkammer (5), der fünfte Reaktor (12) und/oder der Zwischenspeicher (26) eine Sensoreinheit zur Überwachung des pH-Werts und des Salzgehalts aufweisen.

**15.** Verwendung der Vorrichtung (1) nach einem der Ansprüche 12 bis 14 zur Reinigung von Abwässern der Textilindustrie.

**Claims**

**1.** Method for purifying wastewater contaminated with electrolytes and dyes, comprising the steps of:

a) neutralizing the electrolyte salts by adding at least one first neutralizing agent,
b) sedimentation of precipitable impurities and deposition of relatively clean water,
c) diluting the neutralized water with fresh water, depending on the conductivity of the neutralized water,
d) binding the dyes by adding at least one dye pigment binder,
e) flocculation of the bound dye pigments by addition of at least one flocculant,
f) accelerating flake formation by adding at least one flake-forming accelerator,
g) sedimentation of precipitable impurities and deposition of relatively clean water,
h) filtration of the treated water with a first filtration medium,
i) filtration of the treated and filtered water with a second filtration medium,
j) neutralization of the electrolyte salts by addition of at least one second neutralizing agent,
k) reverse osmosis of the neutralized saline solution.

**2.** The method as claimed in claim 1, **characterized in that** magnesium oxide and/or magnesium hydroxide are used as the first neutralizing agent
or

calcium oxide and/or calcium hydroxide and
calcium aluminates can be added to the wastewater.

**3.** Method according to claim 1 or 2, **characterized in that** polymeric, polyfunctional amides are used as dye pigment binders.

**4.** Method according to one of claims 1 to 3, **characterized in that** aluminum- and/or iron-containing precipitating agents are used as flocculants.

**5.** Method according to one of claims 1 to 3, **characterized in that** a cationic and/or nonionic polyacrylamide-based polymer is used as the flake-forming accelerator.

**6.** Method according to one of the claims 1 to 5, **characterized in that** granulated microporous aluminosilicates are used as the first filtration medium.

**7.** Method according to one of the claims 1 to 6, **characterized in that** granulated activated carbon is used as the second filtration medium.

**8.** Method according to one of claims 1 to 7, **characterized in that** mineral acids containing target anions are used as second neutralizing agent.

**9.** Method according to one of claims 1 to 8, **characterized in that** the electrolyte salts obtained in step (j) are fed to a method for dyeing textiles.

**10.** Method according to one of claims 1 to 9, **characterized in that** the concentrate collected in step (k) is fed to a process for dyeing fabrics.

**11.** Method according to one of claims 1 to 10, **characterized in that** the membrane permeate obtained in step (k) is fed to the dilution in step (c).

**12.** Device (1) for carrying out a method according to one of claims 1 to 11, comprising:

at least one intermediate waste water buffer (2),
a first reactor (3) downstream from the intermediate waste water buffer (2), comprising a mixing chamber with a mixing device (16) and at least one metering system (18) for filling the first reactor (3),
a first clarification basin (4) arranged downstream from the first reactor (3),
a mixing chamber (5) downstream from the first clarification basin (4), comprising a mixing device (16),
a second reactor (6) downstream of the mixing chamber (5), comprising a mixing chamber with a mixing device (16) and at least one metering system (22) for filling the second reactor (6),
a third reactor (7) downstream of the second reactor (6), comprising a mixing chamber with a mixing device (16) and at least one metering system (23),
a fourth reactor (8) downstream of the third reactor (7), comprising a precipitation chamber, a mixing device (16) and at least one metering system (24),
a second clarification basin (9) arranged downstream of the fourth reactor (8),
a first filter unit (10) downstream of the second clarification basin (9),
a second filter unit (11) downstream of the first filter unit (10),
a fifth reactor (12) downstream of the second filter unit, comprising a neutralization chamber with a mixing device (16),
and
a separator (13) downstream of the fifth reactor (12), wherein the separator (13) is designed as a reverse osmosis membrane system.

13. Device (1) according to claim 12, **characterized in that** concentrate deposited in the separator (13) can be conducted into a temporary accumulator (26) and purified water into a pure water tank (27).

14. Device (1) according to claim 12 or 13, **characterized in that** the first reactor (3), the mixing chamber (5), the fifth reactor (12) and/or the intermediate accumulator (26) have a sensor unit for monitoring the pH and the salt content.

15. Use of the device (1) according to one of claims 12 to 14 for cleaning wastewater of the textile industry.


**Revendications**

1. Procédé de purification d'eaux usées contaminées par des électrolytes et des colorants, comprenant les étapes suivantes :

   a) la neutralisation des sels d'électrolytes par ajout d'au moins un premier agent neutralisant,
   b) la sédimentation d'impuretés précipitables et la séparation d'eau relativement pure,
   c) la dilution de l'eau neutralisée avec de l'eau fraîche, en fonction de la conductivité de l'eau neutralisée,
   d) la liaison des colorants par ajout d'au moins un liant de pigment de colorant,
   e) la floculation des pigments de colorants liés par ajout d'au moins un floculant,
   f) l'accélération de la floculation par ajout d'au moins un accélérateur de floculation,
   g) la sédimentation d'impuretés précipitables et la séparation d'eau relativement pure,
   h) la filtration de l'eau traitée avec un premier milieu de filtration,
   i) la filtration de l'eau traitée et filtrée avec un deuxième milieu de filtration,
   j) la neutralisation des sels d'électrolytes par ajout d'au moins un deuxième agent neutralisant,
   k) l'osmose inverse de la solution de sels neutralisée.

2. Procédé selon la revendication 1, **caractérisé en ce qu'**en tant que premier agent neutralisant, de l'oxyde de magnésium et/ou de l'hydroxyde de magnésium
   ou

   de l'oxyde de calcium et/ou de l'hydroxyde de calcium et
   des aluminates de calcium sont ajoutés aux eaux usées.

3. Procédé selon la revendication 1 ou 2, **caractérisé en ce que** des amides polymères polyfonctionnels sont utilisés en tant que liants de pigments de colorants.

4. Procédé selon l'une quelconque des revendications 1 à 3, **caractérisé en ce que** des agents précipitants contenant de l'aluminium et/ou du fer sont utilisés en tant que floculants.

5. Procédé selon l'une quelconque des revendications 1 à 3, **caractérisé en ce qu'**un polymère à base de polyacrylamide cationique et/ou non ionique est utilisé en tant qu'accélérateur de floculation.

6. Procédé selon l'une quelconque des revendications 1 à 5, **caractérisé en ce que** des silicates d'aluminium microporeux granulés sont utilisés en tant que premier milieu de filtration.

7. Procédé selon l'une quelconque des revendications 1 à 6, **caractérisé en ce que** du charbon actif granulé est utilisé en tant que deuxième milieu de filtration.

8. Procédé selon l'une quelconque des revendications 1 à 7, **caractérisé en ce que** des acides minéraux contenant des anions cibles sont utilisés en tant que deuxième agent neutralisant.

9. Procédé selon l'une quelconque des revendications 1 à 8, **caractérisé en ce que** les sels d'électrolytes obtenus à l'étape (j) sont amenés à un procédé de teinture de textiles.

10. Procédé selon l'une quelconque des revendications 1 à 9, **caractérisé en ce que** le concentré recueilli à l'étape (k) est amené à un procédé de teinture de textiles.

11. Procédé selon l'une quelconque des revendications 1 à 10, **caractérisé en ce que** le perméat de membrane recueilli à l'étape (k) est amené à la dilution à l'étape (c).

12. Dispositif (1) pour la mise en oeuvre d'un procédé selon l'une quelconque des revendications 1 à 11, comprenant:

   au moins un réservoir intermédiaire d'eaux usées (2),
   un premier réacteur (3) agencé en aval du réservoir intermédiaire d'eaux usées (2), comprenant une chambre de mélange avec un dispositif de mélange (16) et au moins un système de dosage (18) pour remplir le premier réacteur (3),
   un premier bassin de clarification (4) agencé en aval du premier réacteur (3),
   une chambre de mélange (5) agencée en aval du premier bassin de clarification (4), comprenant un dispositif de mélange (16),
   un deuxième réacteur (6) agencé en aval de la chambre de mélange (5), comprenant une chambre de mélange avec un dispositif de mélange (16) et au moins un système de système de dosage (22) pour remplir le deuxième réacteur (6),
   un troisième réacteur (7) agencé en aval du deuxième réacteur (6), comprenant une chambre de mélange avec un dispositif de mélange (16) et au moins un système de dosage (23),
   un quatrième réacteur (8) agencé en aval du troisième réacteur (7), comprenant une chambre de précipitation, un dispositif de mélange (16) et au moins un système de dosage (24),
   un deuxième bassin de clarification (9) agencé en aval du quatrième réacteur (8),
   une première unité de filtration (10) agencée en aval du deuxième bassin de clarification (9),
   une deuxième unité de filtration (11) agencée en aval de la première unité de filtration (10),
   un cinquième réacteur (12) agencé en aval de la deuxième unité de filtration, comprenant une chambre de neutralisation avec un dispositif de mélange (16), et
   un séparateur (13) agencé en aval du cinquième réacteur (12), le séparateur (13) étant conçu sous forme d'unité d'osmose inverse.

13. Dispositif (1) selon la revendication 12, **caractérisé en ce que** le concentré séparé dans le séparateur (13) peut être dirigé vers un réservoir intermédiaire (26) et l'eau purifiée vers une cuve d'eau pure (27).

14. Dispositif (1) selon la revendication 12 ou 13, **caractérisé en ce que** le premier réacteur (3), la chambre de mélange (5), le cinquième réacteur (12) et/ou le réservoir intermédiaire (26) sont équipés d'une unité de détection pour la surveillance de la valeur du pH et de la teneur en sels.

15. Utilisation du dispositif (1) selon l'une quelconque des revendications 12 à 14 pour la purification d'eaux usées de l'industrie textile.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6059978 A
- US 20010052499 A1
- DE 2740855 A1
- US 20160068417 A1
- ES 2350074 A1
- US 4439203 A
- US 4764585 A